# EUROPÄISCHE PATENTSCHRIFT

(11) **EP 0 452 549 B1**
(45) Veröffentlichungstag und Bekanntmachung des Hinweises auf die Patenterteilung: **19.05.1993**
(21) Anmeldenummer: 90122477.4
(22) Anmeldetag: 26.11.1990
(51) Int. Cl.: G02C 7/04

(54) **Kontaktlinse mit Lagestabilisierung**
Contact lens with position stabilisation
Lentille de contact avec stabilisation de position

(30) Priorität: 19.04.1990 DE 4012478
(43) Veröffentlichungstag der Anmeldung: 23.10.1991
(73) Patentinhaber: HEINRICH WÖHLK, INSTITUT FÜR CONTACTLINSEN GmbH & CO., D-24232 Schönkirchen (DE)
(72) Erfinder: Rothe, Eckhard, W-2314 Schönkirchen (DE)
(74) Vertreter: Fey, Hans-Jürgen

(56) Entgegenhaltungen:
- EP-A- 0 042 023
- WO-A-84/04724
- WO-A-89/07303
- WO-A-89/12246
- DE-A- 2 940 352
- US-A- 3 698 802
- US-A- 4 095 878

## Beschreibung

Die Erfindung betrifft eine Kontaktlinse mit Lagestabilisierung, für ein menschliches Auge, mit einer konvexen Außenfläche, welche eine zentral angeordnete optische Zone, einen Linsenaußenbereich und als äußersten Bereich einen Randbereich besitzt, und mit außerhalb der optischen Zone auf dem Linsen außenbereich vorgesehenen Mitteln zur Einstellung einer bestimmten Orientierung der Kontaktlinse relativ zum Auge des Kontaktlinsenträgers mit mindestens zwei relativ zum Linsenaußenbereich verdickten Bereichen in Form von Erhebungen auf den Außenfläche.

Kontaktlinsen mit Lagestabilisierung der Linse auf dem menschlichen Auge dienen z.B. zur Korrektur achsenabhängiger Fehlsichtigkeiten des Auges (z.B. Astigmatismus). Die Stabilisierung der Achsenlage der Kontaktlinse dient dazu, die Drehbewegung der Kontaktlinse auf dem Auge zu unterbinden und die Orientierung der Kontaktlinse auch nach einem Lidschlag sicherzustellen. Es sind verschiedene Stabilisierungsprinzipien bekannt, um eine Lagestabilisierung einer Kontaktlinse auf einem Auge zu erreichen.

Man kann mit einer torischen Rückfläche die Rotation der Kontaktlinse auf dem Auge unterbinden, wenn der Hornhautastigmatismus des Auges ausreichend groß ist (US-PS 47 87 732). Diese Voraussetzung ist aber nur in den seltensten Fällen erfüllt.

Ein sehr beschränktes Einsatzgebiet ist auch für Kontaktlinsen gegeben, welche nur bei Nahsicht eine optische Wirkung besitzen (DE-PS 33 08 570, US-PS 48 50 689, US-PS 35 91 264).

Kontaktlinsen mit Prismenballast haben auf dem Auge durch eine unterschiedliche Dicke entlang des Kontaktlinsenumfanges eine stabilisierte Lage und es kommt nur zu einer eingeschränkten Rotationsbewegung. Durch das erhöhte Gewicht der Linse im unteren Bereich sinkt die Linse nach jedem Lidschlag, welcher sie aus der stabilisierten Lage holt, wieder in ihre Gebrauchslage (z.B. DE-PS 35 21 745). Diese Verdickung am unteren Linsenrand ruft aber bei vielen Kontaktlinsenträgern ein Fremdkörpergefühl hervor und die Linse wird deshalb als störend empfunden. Dasselbe gilt für Kontaktlinsen mit einer Randverstärkung im unteren Linsenbereich (DE-PS 20 46 389, DE-Gbm 70 34 876). Ein weiterer Nachteil der auf dieser Art und Weise stabilsierten Kontaktlinse ist, daß die Sauerstoffdurchlässigkeit einer Kontaktlinse außer vom Linsenmaterial stark von der Dicke des Linsenmaterials abhängig ist und für eine hohe Verträglichkeit der Kontaktlinse auf dem Auge eine hohe Sauerstoffdurchlässigkeit gefordert werden muß.

Es sind auch Stabilisierungen durch eine dauerhafte Auflage auf dem Augenunterlid (DE-PS 30 03 985, US-PS 45 08 438) bekannt. Durch das permanente Aufliegen der Kontaktlinse mit ihrem ganzen Gewicht auf dem Augenunterlid ist dieses aber einer permanenten Reizung unterworfen, welche insbesondere beim Lidschlag verstärkt vom Kontaktlinsenträger empfunden wird.

Während die oben beschriebenen Stabilisierungslösungen einen statischen Weg verwendet haben, um die Bewegung einer Kontaktlinse auf dem Auge des Trägers zu unterdrücken, gibt es auch Stabilisierungslösungen, welche eine dynamische Stabilisierung verwenden. Die dynamisch stabilisierten Kontaktlinsen nutzen die Bewegung der beiden Augenlider beim Lidschlag aus. Dabei erfolgt die Stabilisierung der Kontaktlinse auf dem Auge des Trägers beim Lidschluß.

Es ist eine Lösung bekannt, bei welcher die dynamische Stabilisierung durch eine Verminderung der Dicke an der Linsenaußenfläche an zwei symmetrisch zueinanderliegenden Bereichen erfolgt (DE-PS 24 15 108, DE-PS 29 40 352). Diese Bereiche sind symmetrisch zu einer in der Tragestellung der Kontaktlinse horizontalen Mittelebene und sie haben eine sichelförmige Form. Dadurch wird die Kontaktlinse in der horizontalen Mittelebene dicker als in den beiden sichelförmigen Bereichen. Bei einem Lidschlag gleiten nun das Ober- und das Unterlid des Auges über die Kontaktlinse und durch das langsame Ansteigen der Dicke der Kontaktlinse in den sichelförmigen Bereichen erfolgt ein von der Lage der Kontaktlinse auf dem Auge abhängiger Druck auf die Kontaktlinse. Dieser Druck führt zu einem Ausrichten der Kontaktlinse. Die Ausrichtung erfolgt bei jedem Lidschlag, während bei geöffnetem Auge keine Stabilisierung erfolgt.

Es ist eine weitere Lösung nach dem dynamischen Stabilitätsprinzip bekannt, bei welcher die Kontaktlinse in der horizontalen Mittelachse in zwei äußeren Bereichen bewußt verdickt wird (EP-PS 0 042 023). Diese verdickten Bereiche führen bei einem Lidschluß der Augenlider zu einer gezielten Ausrichtung der Kontaktlinse. Auch hier erfolgt die Ausrichtung bei jedem Lidschlag, während bei geöffnetem Auge keine Stabilisierung erfolgt.

Der vorliegenden Erfindung liegt nun die Aufgabe zugrunde, eine sichere Lagestabilisierung einer Kontaktlinse auf dem Auge eines Kontaktlinsenträgers zu schaffen, welche die Lidgeometrie und die Lidbewegung berücksichtigt.

Diese Aufgabe wird erfindungsgemäß durch eine Kontaktlinse nach dem kennzeichnenden Teil des ersten Patentanspruchs gelöst.

Indem man die unterschiedlich dicken Bereiche im wesentlichen unterhalb der horizontalen Mittelachse (18) anordnet, erhält man eine optimale Anpassung an die Stellung der Augenlider bei der Mehrzahl der Kontaktlinsenträger. Ordnet man sie dagegen auf der horizontalen Mittelachse an, so löst sich das Augenunterlid zu früh von den stabilisierenden Bereichen und es kommt zu einer in gewissen Grenzen liegenden unkontrollierten Ablösung von den verdickten Bereichen.

Um die Stabilisierung zu ermöglichen, sind zwei verdickte Bereiche im wesentlichen unterhalb zu einer in der Tragestellung der Kontaktlinse horizontalen Mittelachse angeordnet. Die Größe, die Lage und die Mindesthöhe der verdickten Bereiche bestimmen sich dabei aus der Lidgeometrie und der Lidmechanik. Um eine optimale Hebelwirkung zu erzielen, sind die verdickten Bereiche zwischen der optischen Zone und dem Randbereich der Kontaktlinse seitlich zu einer vertikalen Mittelachse angeordnet.

Es ist vorteilhaft, zusätzlich mindestens ein weiteres Mittel auf der Außenfläche der Kontaktlinse vorzusehen, welches bei einem Lidschlag der Bewegung des Augenoberlides nach unten einen gewissen, leichten Widerstand entgegensetzt. Dieses Mittel muß oberhalb der verdickten Bereiche auf der Außenfläche der Kontaktlinse angeordnet sein.

Die Form der verdickten Bereiche wird vorteilhafterweise so gewählt, daß jeder der verdickten Bereiche zumindest an einem Punkt seiner unteren Begrenzung bei geöffnetem Auge auf dem unteren Augenlid anliegt. Dadurch erhält man neben der bei jedem Lidschlag wirkenden dynamischen Lagestabilisierung eine statische Lagestabilisierung auch bei geöffnetem Auge, so daß eine Ablösung des Augenoberlides von dem verdickten Bereich keine Stabilitätsstörung erzeugen kann. Bei jedem Lidschlag richten dabei die oberhalb der verdickten Bereiche angebrachten Mittel die verdickten Bereiche auf dem Augenunterlid aus.

Mit der erfindungsgemäßen Kontaktlinse kann dann erstmals eine dynamische mit einer statischen Lagestabilisierung kombiniert und so eine exakte Orientierung einer Kontaktlinse auf der Hornhaut des Auges eines Kontaktlinsenträgers zu jedem Zeitpunkt sichergestellt werden, wobei die Lagestabilisierung von der Materialdicke der gesamten Kontaktlinse nicht abhängig ist. Die Stabilisierung der Kontaktlinse auf der Hornhaut des Auges kann dabei durch ein "Ausrichten" auf dem Augenunterlid charakterisiert werden.

Indem man die verdickten Bereiche länglich ausführt, kann man erreichen, daß die Stabilisierung der Kontaktlinse auf dem Auge durch ein "Einrasten" in der Lidspalte charakterisiert werden kann.

Indem man die beiden verdickten Bereiche, welche auch für die dynamische Komponente der Stabilisierung verwendet werden können, in die untere Kontaktlinsenhälfte legt, erreicht man, daß das Oberlid des Auges nach einer Stabilisierung der Kontaktlinse auf der Hornhaut des Auges eine möglichst geringe Behinderung erfährt. Die Kontaktlinsen haben dadurch einen ähnlichen Tragekomfort wie die bekannten sphärischen Kontaktlinsen.

Es ist vorteilhaft, die gesamte Kontaktlinse aus einem Rohling zu fertigen, so daß die verdickten Bereiche und der Rest der Kontaktlinse aus ein und demselben Material bestehen. Dies senkt die Herstellungskosten.

Indem man die verdickten Bereiche zumindest an den gegenüberliegenden Seiten abflacht, erreicht man eine starke Verringerung des Fremdkörpergefühls. Besonders vorteilhaft ist es dabei, wenn die obere und die untere Abflachung eine konkave, die innere und äußere Abflachung hingegen eine konvexe Fläche besitzen.

Die erfindunsgemäße Stabilisierung der Kontaktlinse ermöglicht es, die optische Zone fast kreisförmig zu gestalten, wobei die Größe dieser optischen Zone relativ zum Durchmesser der gesamten Kontaktlinse sehr groß ist. Es bietet sich an, diese optische Zone mit einer torischen Oberfläche zu versehen, um richtungsabhängige Fehlsichtigkeiten zu korrigieren oder ein scharfes Sehen mehrerer Entfernungsbereiche zu ermöglichen.

Indem man die obere Begrenzungslinie der verdickten Bereiche zum Linsenmittelpunkt ausrichtet, erhält man eine bessere Anpassung an die Form des oberen Augenlides.

Um die Lage der Kontaktlinse relativ zur Hornhaut des Auges bei einer Anpassung und Überprüfung durch einen Anpasser besser bestimmen zu können, kann man auf der Linsenaußenfläche mindestens eine Markierung zur Bestimmung der Lage der Kontaktlinse auf dem Auge vorsehen.

Diese oder gegebenenfalls weitere Mittel sind auch vorteilhaft, um den Kontaktlinsenträger ein lagerichtiges Einsetzen der Kontaktlinse auf die Hornhaut seines Auges zu erleichtern.

Wenngleich die erfindungsgemäße Kontaktlinse aus weichem oder aus hartem Material bestehen kann, so ist das Stabilisierungsprinzip insbesondere für weiche Kontaktlinsen sehr vorteilhaft.

Die Erfindung wird im folgenden anhand eines Ausführungsbeispiels, unter Bezugnahme auf die beiliegenden Figuren, näher erläutert, wobei das nachfolgende Beispiel keinen abschließenden Charakter für die Erfindung hat und weitere vorteilhafte Ausgestaltungen der Erfindung beinhaltet.

Es sind zu sehen in
Figur 1 eine erfindungsgemäße Kontaktlinse in Aufsicht;
Figur 2 ein vertikaler Schnitt durch die Kontaktlinse aus Figur 1;
Figur 3 ein horizontaler Schnitt durch die Kontaktlinse aus Figur 1;
Figur 4 eine auf die Hornhaut eines Auges aufgesetzte Kontaktlinse, und in
Figur 5 eine Detailzeichnung als Schnitt im Bereich eines verdickten Bereiches.

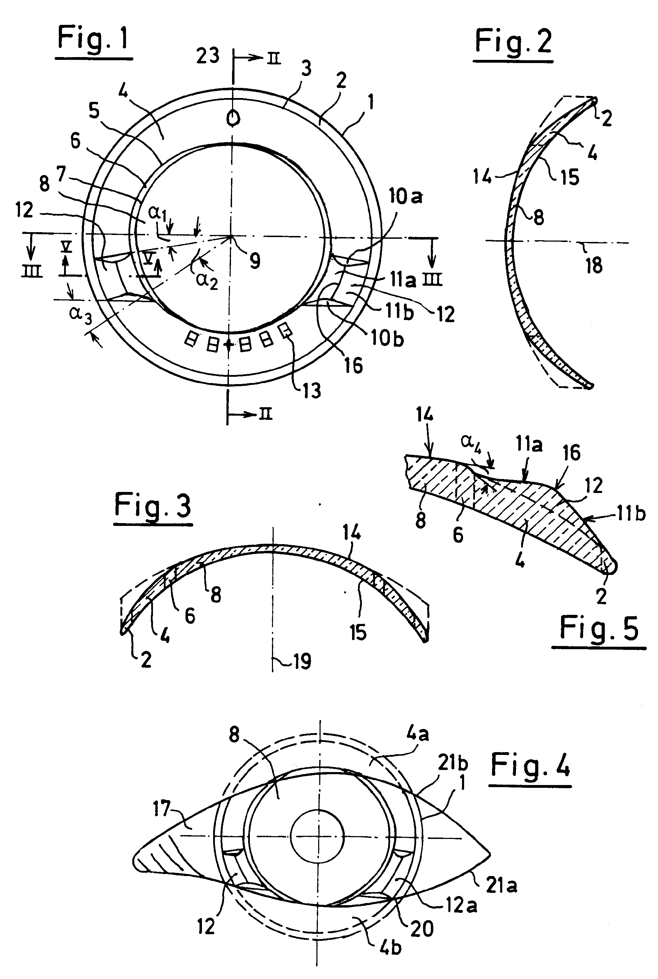

Die in Figur 1-5 dargestellte kreisrunde Kontaktlinse (1) besteht aus einem weichen Material. Sie besitzt eine konvexe Außenfläche (14) und eine konkave Innenfläche (15). Beim Tragen der Kontaktlinse (1) wird die Innenfläche (15) auf die Hornhaut eines Auges (17) eines Kontaktlinsenträgers aufgelegt. Die Innenfläche (15) der Kontaktlinse (1) ist in ihrer Form der Form der Hornhaut des Auges (17) angepaßt. Die Außenfläche (14) der Kontaktlinse (1) läßt sich in mehrere Zonen einteilen.

Im zentralen Teil der Kontaktlinse (1) befindet sich die optische Zone (8). Diese optische Zone (8) ist fast kreisförmig und hat in ihrem Kreismittelpunkt den Linsenmittelpunkt (9). Die Außenfläche (14) besitzt im Bereich der optischen Zone (8) eine torische Oberfläche.

Zwischen der torischen optischen Zone (8) und einem Linsenaußenbereich (4) befindet sich eine Verbindungszone (6). In dieser Verbindungszone (6) erfolgt die Anpassung der Außenfläche (14) von der torische geformten optischen Zone (8) und dem sphärisch geformten Linsenaußenbereich (4).

Nach dem im wesentlichen sphärisch geformten Linsenaußenbereich (4) folgt der Randbereich (2). Dieser ist so geformt, daß die Kontaktlinse (1) bei einer Bewegung auf der Hornhaut des Auges einen möglichst geringen Widerstand für die Aufgleitbewegung der Augenoberlider (21a, b) erzeugt. Dies ist wichtig, damit die Kontaktlinse (1) von dem Kontaktlinsenträger auf dem Auge (17) als angenehm empfunden wird.

Der Bereich der optischen Zone (8) dient zur Korrektur der Fehlsichtigkeit des Kontaktlinsenträgers. Im Prinzip könnte die optische Zone (8) auch eine sphärische Oberfläche besitzen. Doch wäre dann eine Lagestabilisierung der Kontaktlinse (1) auf dem Auge (17) nicht notwendig. Mit der torisch geformten Oberfläche der optischen Zone (8) können insbesondere achsenabhängige Fehlsichtigkeiten korrigiert werden. Bei entsprechender Gestaltung der Oberfläche der optischen Zone können aber auch von einem fehlsichtigen Kontaktlinsenträger mehrere Entfernungsbereiche klar erkannt werden.

Auf dem Linsenaußenbereich (4) befinden sich zwei verdickte Bereiche (12). Diese verdickten Bereiche (12) sind unterhalb zu einer in der Tragestellung der Kontaktlinse (1) horizontalen Mittelachse (18) symmetrisch zu einer vertikalen Mittelachse (19) angeordnet. Sie dienen zur Einstellung einer bestimmten Lageorientierung der Kontaktlinse (1) relativ zum Auge (17) des Kontaktlinsenträgers.

Um jederzeit eine sichere Lageorientierung sicherzustellen, liegen die verdickten Bereiche (12) mit mindestens einem Punkt (20) ihrer unteren Begrenzungslinie leicht auf dem Augenunterlid (21a) auf.

Die verdickten Bereiche (12) bestehen aus demselben Material wie der Rest der Kontaktlinse (1) und entstehen bei der Oberflächenbearbeitung der Außenfläche (14) der Kontaktlinse (1). Sie haben eine längliche Form und besitzen eine längliche, zentrale Erhebung (16), wobei die verdickten Bereiche (12) sich nur auf dem Linsenaußenbereich (4) erstrecken. Seitlich enden die verdickten Bereiche (12) einerseits an der Trennlinie (3) zwischen Randbereich (2) und Linsenaußenfläche (4) und andererseits an der Trennlinie (5) zwischen Linsenaußenbereich (4) und Verbindungszone (6). Ihre Ausdehnung auf dem ringförmigen Linsenaußenbereich (4) ist entlang des Umfanges des Linsenaußenbereichs (4) größer als zwischen den beiden Trennlinien (3; 5).

Die beiden verdickten Bereiche (12) sind allseitig abgeflacht, wobei die obere und untere Abflachung (10a, b) steiler ist als die innere und äußere Abflachung (11a, b) eines verdickten Bereiches (12). Durch diese Maßnahme wird erreicht, daß die zentrale Erhebung (16) einen möglichst flachen Winkel hat und bei einem Lidschlag das Augenoberlid (21b) nach dem Aufgleiten auf die verdickten Bereiche (12) die zentrale Erhebung (16) nicht als störend empfunden wird. Die steiler abfallenden unteren und oberen Abflachungen (10a, b) sorgen für eine gute Ausrichtung der Kontaktlinse (1) auf dem Auge (17).

Zwischen der horizontalen Mittelachse (18) und der oberen Begrenzung der verdickten Bereiche (12) besteht ein Winkel α1, welcher im Bereich von ± 30° um die horizontale Mittelachse (18) liegen kann, während der Winkel α₂ zwischen der horizontalen Mittelachse (18) und dem Mittelpunkt der unteren Begrenzung eines verdickten Bereiches (12) im Bereich zwischen 5° und 80° liegen kann. Vorteilhafter ist es aber, wenn α₁ im Bereich zwischen 0° und 20° und α₂ im Bereich zwischen 40° bis 80° liegt. Der Winkel α₃ zwischen dem Mittelpunkt der unteren Begrenzung eines verdickten Bereiches (12) und der oberen Begrenzungslinie des verdickten Bereiches (12) kann im Bereich zwischen 20° und 80°, vorteilhafterweise im Bereich zwischen 35° und 75° liegen. Als eine sehr gute Winkelkombination wurde ermittelt:
α1 = 10°
α2 = 60°
α3 = 65°

Die Winkel der oberen und unteren Abflachung (10a, b) können im Bereich zwischen 5° und 45° liegen, wobei ein optimaler Winkel ungefähr 12° beträgt. Der Winkel der inneren Abflachung (11a) liegt vorteilhafterweise im Bereich zwischen 20° und 45°, der Winkel der äußeren Abflachung (11b) im Bereich zwischen 55° und 65°. Die Winkel sind dabei auf eine gedachte, konzentrische Linie auf dem Linsenaußenbereich (4) bezogen. Die oberen und unteren Abflachungen (10a, b) sind als nach innen gewölbte Flächen ausgeführt. Die inneren und äußeren Abflachungen sind nach außen gewölbte Flächen, so daß die zentrale Erhebung (16) nicht erkennbar vorhanden ist, da ein stetiger Verlauf von der inneren zur äußeren Abflachung vorliegt. Die nach innen gewölbten Flächen der oberen und unteren Abflachungen (10a, b) ermöglichen einerseits ein leichtes Aufgleiten des Augenoberlides (21b) und andererseits eine als angenehm empfundene Anlage der unteren Begrenzung der verdickten Bereiche (12) auf dem Augenunterlid (21a). Die nach außen gewölbten äußeren und inneren Abflachungen (11a, b) sorgen für eine möglichst flache zentrale Erhebung (16) mit stetigem Verlauf. Dies kann durch eine Politur unterstützt werden. Die Außenflächen (10a, b; 11 a, b) sind bei dieser Gestaltung der Abflachungen (10a, b; 11a, b) Zylindermantelsegmente.

Die Verbindungszone (6) fällt mit einem Winkel α₄ ab, welcher maximal 70° betragen kann, wobei ein Bereich zwischen 30° und 60° vorteilhaft ist.

Die beiden verdickten Bereiche (12) haben in Figur 1 dieselbe Ausdehnung. Man kann aber durch eine unterschiedliche Größe der beiden verdickten Bereiche (12) eine bessere Wirkung der Lagestabilisierung erzielen (siehe Figur 4), wobei die Lage der längeren Verdickung (12a) auf der Nasenseite des Auges (17) liegen sollte. Man kann somit die individuellen Lidverhältnisse des Kontaktlinsenträgers berücksichtigen, indem man die Größe der verdickten Bereiche (12) gemäß Rezept ausführt. Die verdickten Bereiche (12) müssen eine gewisse Mindesthöhe besitzen, um ihre Aufgabe sinnvoll erfüllen zu können. Wird die Höhe oberhalb der normalen Außenfläche (14) an der Stelle der zentralen Erhebung (16) gemessen, so liegt eine optimale Höhe ungefähr bei 0,4m. Abhängig ist diese Höhe von der Lidgeometrie wie Lidradius, Stellung der Lider zueinander, Form der Lidspalte, Position der Lider auf der Hornhaut des Auges (17) und der Lidmechanik wie Lidschlagfrequenz und Liddruck. Mit einer begrenzten Anzahl von Experimenten kann man für jeden Kontaktlinsenträger eine optimale Feinabstimmung erreichen.

Damit die Kontaktlinse (1) von dem Anpasser auf der Hornhaut des Auges (17) eines Kontaktlinsenträgers leichter anzupassen ist, besitzt die Kontaktlinse (1) in ihrem unteren Bereich im Bereich dem Linsenaußenbereich (4) eine Beschriftung (13) bzw. Gravur. Dies dient sowohl zur Identifizierung der Kontaktlinse (1) als auch zur Bestimmung der Achslage der Hauptschnitte. Die Beschriftung (13) ist so aufgebaut, daß ein Plus-Zeichen die Lage der vertikalen Mittelachse (19) kennzeichnet. Um dieses Plus-Zeichen sind links und rechts Zeichen angeordnet, wobei der von dem Plus-Zeichen abgewandte äußere vertikale Strich jedes dieser weiteren Zeichen einen definierten Winkel (z.B. 10°) zu dem jeweiligen äußeren vertikalen Strich des folgenden Zeichens bzw. zum vertikalen Strich des Plus-Zeichens hat.

Die Sichtbarkeit der Kennzeichnung insbesondere im Spaltlampenmikroskop ermöglicht es, daß die senkrechte Linie im Okular des Mikroskopes - bei Deckung mit dem Plus-Zeichen - die Vertikale (90°/270° nach Tabo) anzeigt. Bei Deckung mit dem rechten oder linken äußeren vertikalen Strich einer Ziffer seitlich von dem Plus-Zeichen beträgt die Abweichung +10° bzw. - 10°, so daß der Anpasser eine einfache Feinabstimmung durchführen kann.

Ein besonderes Problem bei dem Einsetzen der Kontaktlinse (1) in das geöffnete Auge (17) des Kontaktlinsenträgers besteht darin, daß die Kontaktlinse (1) lagerichtig auf die Hornhaut des Auges (17) aufgesetzte werden muß. Deshalb besitzt die Kontaktlinse (1) einen Farbpunkt (23) mit einem Durchmesser von ungefähr 1mm auf der vertikalen Mittelachse (19) im oberen Linsenbereich auf dem Linsenaußenbereich (4). Dieser Farbpunkt (23) wird nachträglich auf die bereits gequollene Kontaktlinse aufgefärbt und hilft dem Kontaktlinsenträger die Kontaktlinse (1) richtig einzusetzen.

Die erfindungsgemäße Kontaktlinse (1) zeichnet sich dadurch aus, daß ihre Materialdicke unabhängig ist von der Lagestabilisierung. Dadurch ist eine optimale Versorgung des Auges mit Sauerstoff gewährleistet. Betrachtet man die Permeabilität (DK) einer Kontaktlinse (1), so erkennt man den engen Zusammenhang zwischen Linsendicke und Sauerstoffdurchlässigkeit. Da die Lagestabilisierung unabhängig ist von der Materialdicke der optischen Zone und dem Linsenaußenbereich (4), kann man mit der Kontaktlinse (1) bei geeigneter Wahl des Materials eine sehr gute Sauerstoffversorgung des Auges sicherstellen.

In den Figuren 2 und 3 kann man erkennen, daß die Form der Kontaktlinse (1) in der vertikalen Mittelache (19) und der horizontalen Mittelachse (18) fast gleich ist. Die Verbindungszone (6) hat in der horizontalen Mittelachse (18) ihre größte Ausdehnung und verschwindet fast ganz an der vertikalen Mittelachse (19).

Die Kontaktlinse (1) liegt bei geöffnetem Auge (17) normalerweise nur an einem Punkt (20) auf dem Augenunterlid (21a) auf. Durch eine optimale Auswahl der Winkel α₂ und α₃ erreicht man eine linienhafte bzw. flächige Anlage auf dem Augenunterlid (21a), welche aufgrund der Druckverteilung auf dem Augenunterlid (21a) vorteilhaft ist.

Der obere (4a) und der untere (4b) Bereich des Linsenaußenbereichs (4) liegt unter den Augenlidern (21a, b) (siehe Figur 4). Dies ist günstig, damit der Kontaktlinsenträger die Kontaktlinse (1) möglichst wenig spürt. Bei jedem Lidschlag wird die Kontaktlinse (1) erneut gegen das Augenunterlid (21a) gedrückt, an welches sie auch bei geöffnetem Auge (17) leicht anliegt. Dadurch wird eine optimale Lagestabilisierung der Kontaktlinse (1) auf der Hornhaut des Auges (17) zu jedem Zeitpunkt sichergestellt.

Kontaktlinsen (1), welche dieses Stabilisierungsprinzip verwenden, können sowohl aus harten als auch aus weichen Linsenmaterialien bestehen. Der Gesamtdurchmesser der Kontaktlinse (1) liegt vorteilhafterweise zwischen 12mm und 15mm. Besonders vorteilhaft ist das Stabilisierungsprinzip für Kontaktlinsen (1) aus Silikonkautschuk.

Es ist möglich, die verdickten Bereiche (12) auch erst nachher auf eine ansonsten fertiggestellte Kontaktlinse (1) aufzubringen. Dies ist insbesondere dann leicht möglich, wenn man trockene Weichlinsen oder harte Kontaktlinsen hat. Mit genau zu positionierenden Formen können dann "Rohlinsen" (d.h. Kontaktlinsen, welche bis auf die verdickten Bereiche fertig sind) nachträglich mit den verdickten Bereichen (12) versorgt werden. Damit kann man insbesondere die lagerhaltige Vielfalt erheblich reduzieren.

Anstelle von jeweils einem verdickten Bereich (12) seitlich der vertikalen Mittelachse könnten auch zwei verdickte Bereiche und weitere Mittel auf der Außenfläche der Kontaktlinse vorhanden sein. Diese weiteren Mittel können aus verdickten Bereichen (z.B. zwei) oder aus einer sichelförmigen Abflachung der oberen Außenfläche der Kontaktlinse bestehen. Die Mittel sollten dann vorteilhafterweise bei einem Lidschlag der Bewegung des Augenoberlides nach unten einen gewissen, leichten Widerstand entgegensetzen, um für eine gezielte Ausrichtung der verdickten Bereiche auf dem Augenunterlid zu sorgen. Aus diesen Überlegungen ergibt sich zwangsläufig, daß sich diese Mittel oberhalb der verdickten Bereiche auf der Außenfläche der Kontaktlinse befinden müssen. Die unteren verdickten Bereiche können als Anlage an dem Augenunterlid dienen und die Kontaktlinse bei geöffnetem Auge stabilisieren. Die anderen Stabilisierungsmittel würden dabei durch einen leichten Widerstand für die Bewegung des Augenoberlides beim Lidschlag darstellen und zur Ausrichtung der beiden unteren verdickten Bereiche relativ zum Augenunterlid führen.

## Patentansprüche

1. Kontaktlinse mit Lagestabilisierung für ein menschliches Auge, mit einer konvexen Außenfläche (14), welche eine zentral angeordnete optische Zone (8), einen Linsenaußenbereich (4) und als äußersten Bereich einen Randbereich (2) besitzt, und mit außerhalb der optischen Zone auf dem Linsenaußenbereich (4) vorgesehenen Mitteln zur Einstellung einer bestimmten Orientierung der Kontaktlinse relativ zum Auge des Kontaktlinsenträgers mit mindestens zwei relativ zum Linsenaußenbereich verdickten Bereichen (12) in Form von Erhebungen auf der Außenfläche (14) dadurch gekennzeichnet, daß die mindestens zwei verdickten Bereiche (12) durch eine in Tragestellung der Linse betrachtet obere und untere Begrenzungsfläche (10a, 10b) als auch eine innere und äußere Begrenzungsfläche (11a, 11b) begrenzt werden und gänzlich unterhalb zu einer in der Tragestellung der Kontaktlinse (1) horizontalen Mittelachse (18) zwischen der optischen Zone (8) und dem Randbereich (2) auf dem Linsenaußenbereich (4) seitlich zu einer vertikalen Mittelachse (19) angeordnet sind und daß die verdickten Bereiche (12) so angeordnet sind, daß sie bei eingesetzter Kontaktlinse jeweils zumindest an einem Punkt (20) bei geöffnetem Auge (17) auf dem Augenunterlid (21a) aufliegen.

2. Kontaktlinse nach Anspruch 1, dadurch gekennzeichnet, daß mindestens ein weiterer verdickter Bereich auf der Außenfläche (14) der Kontaktlinse (1) oberhalb der beiden verdickten Bereiche (12) angeordnet ist.

3. Kontaktlinse nach Anspruch 2, dadurch gekennzeichnet daß die verdickten Bereiche (12) länglich sind und sich, auf einem Kreisbogen um den Linsenmittelpunkt (9) befinden.

4. Kontaktlinse nach einem der Ansprüche 1-3, dadurch gekennzeichnet, daß die verdickten Bereiche (12) und der Rest der Kontaktlinse (1) aus ein und demselben Material sind.

5. Kontaktlinse nach einem der Ansprüche 1-4, dadurch gekennzeichnet, daß die verdickten Bereiche (12) zumindest durch zwei jeweils gegenüberliegende Begrenzungsflächen (10a, b oder 11a, b) abgeflacht sind.

6. Kontaktlinse nach einem der Ansprüche 2-5, dadurch gekennzeichnet, daß die Form der oberen und unteren Begrenzeungsfläche (10a, b) eines verdickten Bereiches (12) eine konkave, die innere und äußere Begrenzungsfläche (11a, b) eines verdickten Bereiches (12) hingegen eine konvexe ist.

7. Kontaktlinse nach einem der Ansprüche 1-6, dadurch gekennzeichnet, daß die obere Begrenzungslinie der oberen Begrenzungsfläche (10a) der verdickten Bereich (12) zum Linsenmitellpunkt (9) ausgerichtet ist.

8. Kontaktlinse nach einem der Ansprüche 1-7, dadurch gekennzeichnet, daß auf der Linsenaußenfläche (14) mindestens eine Markierung (13; 23) zur Bestimmung der Lage der Kontaktlinse (1) auf dem Auge (17) vorgesehen ist.

9. Kontaktlinse nach einem der Ansprüche 1-8, dadurch gekennzeichnet, daß die Kontaktlinse (1) aus einem zur Herstellung von weichen Kontaktlinsen geeigneten Material besteht.

## Claims

1. Contact lens with positional stabilization for a human eye having a convex outer surface (14) with a central placed optical zone (8), an outer region (4) and most far away from the center a peripheral region (2) and having outside of the optical zone (8) on the outer region (4) means for adjusting a specific orientation of the contact lens relative to the eye of the contact lens wearer with not less then two thickened regions (12) having respective thicknesses relative to said outer region, characterized in that the not less then two thickend region (12), regarded on a worn lens, being limited with a lower and upper surface as well as inside and outside surface, and being disposed totally below a horizontal center axis (18) which is horizontal when the lens (1) body is in a position worn by the wearer, the thickened regions (12) are on the outer region (4) between the optical zone (8) and the peripheral region (2) and being disposed laterally of a vertical axis and that the thickened regions (12) are arranged in a way that they each engage when the contact lens is worn with not less then a point the lower eyelid when the eye is open.

2. Contact lens according to claim 1, characterized in that further at least an additional thickened region is disposed on the outer surface (14) of the contact lens (1) above said thickened regions (12).

3. Contact lens according to claim 2, characterized in that the thickened regions (12) being elongated and are disposed on a arc of a circle with the center of the circle in the middle (9) of the lens.

4. Contact lens according to one of the claims 1 to 3, characterized in that the thickened regions (12) and the remainder of the contact lens (1) being made of one and the same material.

5. Contact lens according to one of the claims 1 to 4, characterized in that the thickened regions having at least two beveled boundary surfaces facing away from each other.

6. Contact lens according to one of the claims 2 to 5, characterized in that each of said thickened regions (12) having upper and lower concave boundary surfaces and inner and outer lateral convex boundary surfaces.

7. Contact lens according to one of the claims 1 to 6, characterized in that the upper boundary surface line of the upper boundary surface of the thickened regions (12) is aligned to the center point (9) of the lens.

8. Contact lens according to one of the claims 1 to 7, characterized in that on the outer surface (14) of the lens not less then one marking (13;33) is placed for determining the position of the contact lens (1) on the eye (17).

9. Contact lens according to one of the claims 1 to 8, characterized in that the contact lens (1) being made of a soft material useful to manufacture soft contact lenses.

## Revendications

1. Lentille de contact à stabilisation de position, pour un oeil humain, comprenant une face externe (14) convexe qui possède une zone optique (8) disposée au centre, une région extérieure (4) et une région marginale (2) en tant que région située le plus à l'extérieur, ainsi que des moyens prévus extérieurement à la zone optique sur la région extérieure (4) de la lentille pour établir une orientation déterminée de la lentille de contact par rapport à l'oeil du porteur de la lentille de contact, moyens qui comportent au moins deux régions épaissies (12) par rapport à la région extérieure, sous la forme de bossages sur la face externe (14), caractérisée en ce que les régions épaissies (12), au nombre de deux au moins, sont délimitées par des faces de délimitation supérieure et inférieure (10a, 10b), considérées à la position de port de la lentille, de même que par des faces de délimitation intérieure et extérieure (11a, 11b), et sont disposées entièrement au-dessous d'un axe horizontal (18), à la position de port de la lentille de contact (1), sur la région extérieure (4) de la lentille entre la zone optique (8) et la région marginale (2), latéralement par rapport à un axe vertical (19), et que les régions épaissies (12) sont disposées de manière qu'elles s'appuient chacune, lorsque la lentille de contact a été mise en place et que l'oeil (17) est ouvert, en au moins un point (20) sur la paupière inférieure (21a).

2. Lentille de contact selon la revendication 1, caractérisée en ce qu'au moins une région épaissie supplémentaire est disposée au-dessus des deux régions épaissies (12) sur la face externe (14) de la lentille de contact (1).

3. Lentille de contact selon la revendication 2, caractérisée en ce que les régions épaissies (12) sont oblongues et sont situées sur un arc de cercle autour du centre (9) de la lentille.

4. Lentille de contact selon une des revendications 1-3, caractérisée en ce que les régions épaissies (12) et le reste de la lentille de contact (1) sont faits du même matériau.

5. Lentille de contact selon une des revendications 1-4, caractérisée en ce que les régions épaissies (12) sont aplaties par au moins deux faces de délimitation (10a, b ou 11a, b) situées chaque fois l'une à l'opposé de l'autre.

6. Lentille de contact selon une des revendications 2-5, caractérisée en ce que les faces de délimitation supérieure et inférieure (10a, b) d'une région épaissie (12) ont une forme concave, tandis que les faces de délimitation intérieure et extérieure (11a, b) d'une région épaissie (12) ont une forme convexe.

7. Lentille de contact selon une des revendications 1-6, caractérisée en ce que la ligne de délimitation supérieure de la face de délimitation supérieure (10a) des régions épaissies (12) est orientée en direction du centre (9) de la lentille.

8. Lentille de contact selon une des revendications 1-7, caractérisée en ce qu'au moins un marquage (13; 23) pour déterminer la position de la lentille de contact (1) sur l'oeil (17) est prévu sur la face externe (14) de la lentille.

9. Lentille de contact selon une des revendications 1-8, caractérisée en ce que la lentille (1) est faite d'un matériau convenant à la fabrication de lentilles de contact souples.
